# EUROPÄISCHE PATENTSCHRIFT

(11) **EP 2 848 164 B1**
(45) Veröffentlichungstag und Bekanntmachung des Hinweises auf die Patenterteilung: **13.06.2018**
(21) Anmeldenummer: 14165190.1
(22) Anmeldetag: 17.04.2014
(51) Int. Cl.: A47F 11/10, A47F 5/00, G09F 13/04, G09F 13/18

(54) **Warenpräsentationsmodul mit Hintergrundbeleuchtung sowie Warenpräsentationseinheit**
Goods presentation module with a backlight and goods presentation unit
Module de présentation de marchandises doté d'un rétro-éclairage et unité de présentation de marchandises

(30) Priorität: 11.09.2013 DE 202013104137 U
(43) Veröffentlichungstag der Anmeldung: 18.03.2015
(73) Patentinhaber: GESA Form + Funktion Displaybau GmbH, 63303 Dreieich-Offenthal (DE)
(72) Erfinder: Rau, Otmar, 63303 Dreieich-Götzenhain (DE)
(74) Vertreter: 2K Patentanwälte Blasberg Kewitz & Reichel

(56) Entgegenhaltungen:
- EP-A1- 2 732 729
- DE-A1- 3 612 296
- DE-U1-202006 004 865

## Beschreibung

### Gebiet der Erfindung

Die Erfindung betrifft allgemein die Präsentation von Waren, wie beispielsweise Kosmetikartikel, mittels Hintergrundbeleuchtung (backlight) und betrifft insbesondere Module in Form von Regal- oder Einlageböden für Warenpräsentationseinheiten, sowie deren Verwendung für Warenpräsentationseinheiten.

### Hintergrund der Erfindung

Warenpräsentationseinheiten der vorgenannten Art, auch Shelf/Modul genannt, werden als Bestandteil von Verkaufstheken, auch Display genannt, in Verkaufslokalen wie beispielsweise Supermärkten oder Drogeriemärkten aufgestellt und bieten dem Kunden die Möglichkeit, ein bestimmtes Produkt, z. B. ein Kosmetikprodukt, zu präsentieren. Das fertige Shelf/Modul als Bestandteil eines Displays steht beispielsweise in einer Drogerie, Kaufhaus, Parfümerie, etc. und präsentiert Ware (z.B. Kosmetikartikel) zum Abverkauf an den Endverbraucher. Das finale Produkt gibt es je nach Kundenanforderung in unterschiedlichen Optiken.

Das Produkt ist in diesem Fall als Bestandteil eines Displays zu sehen, könnte aber auch in anderen Ausführungen alleine stehen.

Anbieter von Kosmetikprodukten haben oftmals ein eigenes Display in Verkaufsräumen, in dem sie ihre Produkte in einer einheitlichen Form darstellen. Als Bestandteil der Displays werden die Shelfs/Module benötigt, um zum einen die Waren aufzunehmen, zum anderen, um diese zu präsentieren.

Bisher werden Shelfs/Module individuell auf Kundenbedürfnisse in Kunststaffverarbeitung (Tiefziehen, Spritzguss) hergestellt. Diese Shelfs/Module mussten meist mit vielen verschiedenen Lichtquellen (z.B. LED) ausgestattet werden, um diese zu beleuchten.

Zur wirkungsvolleren und attraktiveren Präsentation von Waren haben sich, gerade im Bereich von Kosmetikartikeln, Module bewährt, die mit Ablageplatten aus einem transparenten Material, wie beispielsweise transparentem Kunststoff, versehen sind, die eine Hintergrund-Beleuchtungsfunktion zur Hintergrundbeleuchtung für die zu präsentierenden Waren ermöglichen. Die Ablageplatten wirken dabei als Lichtleiter, aus dem das Licht zur Hintergrundbeleuchtung der Ware in geeigneter Weise ausgekoppelt wird.

Gerade für die Warenpräsentation sind formschön gestaltete Module gesucht, die einerseits kostengünstig und flexibel konfigurierbar hergestellt werden können und andererseits ausreichend robust sind.

DE 102010050417 A1 offenbart eine Regal-Auszeichnungsschiene mit einem vorspringenden Abschnitt, auf dessen Unterseite eine LED-Lichtquelle befestigt ist, die Licht nach unten abstrahlt. Eine Einkopplung von Licht in eine Lichtleiterplatte ist nicht offenbart.

DE 20208161 U1 offenbart einen transparenten Warenpräsentationsboden, in den mehrere LEDs eingearbeitet sind, sodass Licht sowohl nach oben als auch im vorderen Bereich nach unten abgestrahlt wird. Eine Einkopplung von Licht in Lichtleiterplatten im Sinne der vorliegenden Anmeldung wird jedoch nicht offenbart.

DE 20211858 U1 offenbart einen plattenförmigen Regalboden auf Glas mit einem Querprofil am vorderen Rand, an dem eine Leuchtstoffröhre angeordnet ist. Der Regalboden strahlt das Licht nach oben und unten ab. Eine Hintergrundbeleuchtungsfunktion am vorderen Rand wird nicht offenbart.

US 1839287 A offenbart die Einkopplung von Licht einer Lichtquelle in die Stirnseiten von zwei transparenten Lichtleiterplatten, die jeweils mit Mustern versehen sind. Der allgemeine Aufbau ist jedoch grundverschieden zur vorliegenden Anmeldung.

DE 36 12 296 A1 offenbart ein Front-Modul für einen Warenablageabschnitt gemäß dem Oberbegriff von Patentanspruch 1 mit einem Zeichenträger aus einem Licht leitenden Material und einer zugeordneten Lichtquelle (Leuchtstoffröhre). Der Zeichenträger weist auf seiner Vorderseite einen sich schräg aufwärts erstreckenden Motivschenkel auf. Licht wird auf dem Zeichenträger nur im Motivbereich des Motivschenkels ausgekoppelt. In den anderen Bereichen des Zeichenträgers scheint das Licht der Lichtquelle hindurch. Licht wird aus dem Zeichenträger nicht in zwei unterschiedliche Raumrichtungen ausgekoppelt.

DE 20 2006 004865 U1 der Anmelderin offenbart eine flächenstrahlende Beleuchtungseinheit mit einem flächigen, Licht leitenden Körper, der Licht abstrahlt. Der Licht leitende Körper weist jedoch keinen Licht-Umlenkabschnitt im Sinne der vorliegenden Anmeldung auf.

Die nachveröffentlichte EP 2 732 729 A1 offenbart ein weiteres Front-Modul für einen Warenablageabschnitt, wobei Licht in eine flächige Lichtleiter-Platte eingekoppelt und aus deren Vorderseite wieder ausgekoppelt wird. Ein Licht-Umlenkabschnitt im Sinne der vorliegenden Anmeldung ist nicht offenbart.

### Zusammenfassung der Erfindung

Aufgabe der Erfindung ist es, ein verbessertes Front-Modul für Warenpräsentationseinheiten nach dem Oberbegriff von Anspruch 1, insbesondere für Kosmetikartikel, sowie ein verbessertes Modul mit seinem solchen Front-Modul bereitzustellen, das formschön gestaltet werden kann, kostengünstig und flexibel konfigurierbar hergestellt werden kann und im Einsatz ausreichend robust ist. Ferner soll eine Warenpräsentationseinheit mit zumindest einem solchen Modul bereitgestellt werden. Diese Aufgaben werden durch ein Front-Modul nach Anspruch 1, durch ein Modul für eine Warenpräsentationseinheit von Waren, insbesondere von Kosmetikartikeln, nach Anspruch 11 sowie durch eine Warenpräsentationseinheit nach Anspruch 13 gelöst. Weitere vorteilhafte Ausführungsformen sind Gegenstand der rückbezogenen Unteransprüche. Erfindungsgemäß wird ein Front-Modul für einen Warenablageabschnitt einer Warenpräsentationseinheit, insbesondere für einen Warenablageabschnitt eines Moduls für eine Warenpräsentationseinheit, bereitgestellt, wobei das Front-Modul ausgelegt ist, um am vorderen Rand des Warenablageabschnitts vorgesehen bzw. angeordnet zu sein, wobei das Front-Modul eine Vorderseite aufweist, die zur Darbietung von Text- und/oder Graphikinformation für Kunden ausgelegt ist. Das Front-Modul weist eine flächige Lichtleiterplatte und eine dieser zugeordnete Lichtquelle auf, wobei Licht der Lichtquelle in die Lichtleiterplatte eingekoppelt wird, insbesondere in eine Stirnseite oder einen Licht-Umlenkabschnitt derselben. Dabei ist die Lichtleiterplatte geeignet ausgelegt, um auf der Vorderseite des Front-Moduls zumindest abschnittsweise eine Hintergrundbeleuchtung für eine darzubietende Text- und/oder Graphikinformation bereitzustellen. Dabei weist die flächige Lichtleiterplatte einen ersten nicht-gekrümmten Abschnitt, einen sich diesem anschließenden gekrümmten Licht-Umlenkabschnitt und einen sich dem gekrümmten Licht-Umlenkabschnitt anschließenden zweiten nicht-gekrümmten Abschnitt auf, wobei der gekrümmte Licht-Umlenkabschnitt zum Umlenken des in die Lichtleiterplatte eingekoppelten Lichts in eine andere Ausbreitungsrichtung ausgelegt ist.

Erfingdungsgemäß ist die Lichtleiterplatte so ausgelegt, dass Licht in dem ersten nicht-gekrümmten Abschnitt und in dem zweiten nicht-gekrümmten Abschnitt jeweils in unterschiedliche Raumrichtungen ausgekoppelt wird.

Da das Front-Modul im Bereich der Vorderseite eine Hintergrundbeleuchtung in der Art einer aus der Oberfläche der Lichtleiterplatte abgestrahlten Flächenbeleuchtung darbietet, können mit seiner Hilfe Waren erfindungsgemäß noch wirkungsvoller und attraktiver präsentiert werden. Insbesondere können über die Hintergrundbeleuchtung auf der Vorderseite des Front-Moduls werbliche Text- und/oder Graphikinformationen in einfacher Weise dargeboten werden. Das von der Lichtleiterplatte des Front-Moduls abgestrahlte Licht kann ferner auch unmittelbar zur Beleuchtung von Waren verwendet werden. Durch geeignete Formgestaltung der Lichtleiterplatte des Front-Moduls lässt sich auch die Richtung der Lichtabstrahlung geeignet vorgeben. Insbesondere können mit dem von der Lichtleiterplatte des Front-Moduls abgestrahlten Licht unterhalb und/oder oberhalb des Front-Moduls angeordnete Waren oder Abschnitte einer Warenpräsentationseinheit geeignet ausgeleuchtet werden. Dabei kann die Lichtleiterplatte auch abschnittsweise gekrümmt ausgebildet sein und das abgestrahlt Licht auch von Kanten und/oder gekrümmten Abschnitten der Lichtleiterplatte abgestrahlt werden

Die flächige Lichtleiterplatte des Front-Moduls sorgt zweckmäßig für eine gleichmäßige Hintergrundbeleuchtung, zumindest über den gesamten Bereich, in dem die Text- und/oder Graphikinformation hinterleuchtet werden soll. Zweckmäßig erstreckt sich dieser Bereich über die gesamte Breite oder nahezu über die gesamte Breite des Front-Moduls, das sich seinerseits über die gesamte Breite oder nahezu über die gesamte Breite des Warenablageabschnitts erstrecken kann. Der Text- und/oder die Graphikinformation kann dabei auch unmittelbar auf der Vorderseite des Front-Moduls aufgebracht sein, beispielsweise mittels eines Druck- oder Klebevorgangs.

Die Lichtleiterplatte des Front-Moduls ist zweckmäßig aus einem transparenten Kunststoff (PMMA, Polycarbonat, Epoxidharz oder dergleichen) ausgebildet, beispielsweise mittels Kunststoffspritzguß oder Extrudieren eines geeigneten Kunststoffs. Das Licht der zugeordneten Lichtquelle, insbesondere eine Mehrzahl von LEDs oder ein LED-Streifen mit einer solchen Mehrzahl von LEDs, wird zweckmäßig in die Stirnseite der Lichtleiterplatte oder in einen Licht-Umlenkabschnitt hiervon eingespeist. Die Lichtleiterplatte enthält Extraktoren, die das Licht aus dem Lichtleiter für die Hintergrundbeleuchtung an geeigneter Stelle wieder auskoppeln. Die Auskopplung kann durch im Lichtleitermaterial verteilte streuende Strukturen oder Partikel, gezielte feine Oberflächenstrukturen oder feine, aufgedruckte Muster realisiert werden, beispielsweise in Form von Nuten, Vorsprüngen oder Vertiefungen. Zusätzlich kann durch Hinzugabe von lichtleitenden Additivien die Leuchtleitkraft der Lichtleiterplatte aus Kunststoff erhöht werden. Zusätzlich kann auf die Oberseite der flächenbeleuchteten Kunststoffplatte eine sogenannte Diffusorfolie aufgetragen werden, welche die Lichtstreuwirkung reguliert. Die inhomogene Verteilung der auskoppelnden Strukturen bewirkt, dass die gleichmäßige Ausleuchtung der Fläche auch z.B. mit Einkopplung von Licht in nur eine der Stirnseiten der Lichtleiterplatte erreicht wird. Zur Vergrößerung der Leuchtdichte können die Lichtquellen grundsätzlich auch an zwei oder mehr Stirnflächen angebracht werden, im Falle des Warenablageabschnitts insbesondere auch an zwei oder mehr Stirnflächen der Ablageplatte des Warenablageabschnitts. Eine Hintergrundbeleuchtung nach diesem Prinzip wird auf Englisch als edge-lit backlight bezeichnet.

Damit die Waren von dem Warenablageabschnitt zuverlässig abgestützt oder aufgenommen werden können, kann dieser insbesondere kastenförmig ausgebildet sein, mit sich entlang der Ränder erstreckenden erhöhten Seitenabschnitten, die ein Abrutschen der zu präsentierenden Ware verhindern. Oder auf der Ablageplatte sind hülsenförmige Aufnahmen, bevorzugt aus einem transparenten oder opaken Material, vorgesehen oder ausgebildet, in welchen die zu präsentierenden Waren zuverlässig aufgenommen sind.

Gemäß einer weiteren Ausführungsform ist das Front-Modul ferner ausgelegt, um den Warenablageabschnitt zumindest abschnittsweise abzuschließen, um ein Abrutschen von Waren von dem Warenablageabschnitt zu verhindern, wenn das Front-Modul mit dem Warenablageabschnitt verbunden ist. Hierzu kann das Front-Modul insbesondere so ausgestaltet sein, dass dieses, wenn es mit dem Warenablageabschnitt verbunden ist, von einer von dem Warenablageabschnitt aufgespannten Ebene, die zur Ablage von Waren in dem Warenablageabschnitt dient, vorsteht, beispielsweise senkrecht oder unter einen spitzen Winkel von dieser Ebene abragt. Somit braucht der Warenablageabschnitt bei bestimmungsgemäßer Benutzung nicht unbedingt exakt horizontal ausgerichtet zu sein, sondern kann auch geneigt angeordnet sein, insbesondere schräg geneigt abwärts in Richtung des vorderen Endes der Warenpräsentationseinheit.

Erfindungsgemäß erstreckt sich die Lichtleiterplatte in zumindest einem Bereich in eine andere Richtung, um zumindest einen Licht-Umlenkabschnitt auszubilden, um das in die Lichtleiterplatte eingekoppelte Licht in eine andere Ausbreitungsrichtung umzulenken. Licht für eine Hintergrundbeleuchtung kann somit in zumindest zwei unterschiedliche Raumrichtungen abgestrahlt werden, was die Werbewirksamkeit des Front-Moduls bei geringem Energiebedarf weiter erhöhen kann. Aufgrund dieser Formgestaltung kann das Front-Modul Licht in mehr als eine

Raumrichtung abstrahlen, was erhebliche Vorteile bei der Hintergrundbeleuchtung aber auch Ausleuchtung von Abschnitten einer Warenpräsentationseinheit bietet. Als zweckmäßig haben sich dabei Umlenkungen der Lichtausbreitung von 30 Grad, 45 Grad, 60 Grad, 75 Grad oder 90 Grad erwiesen. Grundsätzlich kann die Umlenkung der Lichtausbreitung auch im Wesentlichen um 180 Grad erfolgen, womit sich beispielsweise eine Hintergrundbeleuchtung auf der Vorder- und Rückseite des Front-Moduls einstellen lässt.

Gemäß einer weiteren Ausführungsform kann die vorgenannte Einkopplung des Lichts in die Lichtleiterplatte auch im Bereich eines solchen Licht-Umlenkabschnitts erfolgen, beispielsweise indem ein LED-Streifen oder eine lineare LED-Anordnung entlang dem Licht-Umlenkabschnitt angeordnet wird.

Gemäß einer weiteren Ausführungsform kann das Front-Modul ferner so ausgelegt sein, dass die Orientierung und/oder Lage der Lichtquelle relativ zu der Stirnseite oder dem Licht-Umlenkabschnitt der Lichtleiterplatte verändert werden kann, um die Einkopplung des Lichts der Lichtquelle in die Lichtleiterplatte einzustellen oder anzupassen und so die Beleuchtungsverhältnisse gezielt anzupassen. Bei Einkopplung des Lichts der Lichtquelle über einen Licht-Umlenkabschnitt der Lichtleiterplatte kann insbesondere das Verhältnis der Einkopplung in Abschnitt oberhalb und unterhalb des Licht-Umlenkabschnitts geeignet eingestellt werden.

Das vorgenannte Front-Modul kann grundsätzlich mittels beliebiger Verbindungstechniken mit einem Warenablageabschnitt einer Warenpräsentationseinheit verbunden werden. Als zweckmäßig haben sich hier insbesondere Schraubverbindungen erwiesen. Gemäß einer weiteren Ausführungsform ist das Front-Modul weiterhin ausgelegt, um mit dem Warenablageabschnitt lösbar verrastet werden zu können, insbesondere an einem vorderen Rand desselben. Hierzu sind an dem Front-Modul und/oder am vorderen Rand eines zugeordneten Warenablageabschnitts Verrastungselemente, beispielsweise Rastlaschen, und hierzu korrespondieren Rastaufnahmen vorgesehen.

Eine besonders hohe Energieeffizienz kann gemäß einer weiteren Ausführungsform realisiert werden, wenn die Lichtquelle des Front-Moduls als lineare LED-Anordnung oder als LED-Streifen ausgebildet ist.

Gemäß einer weiteren Ausführungsform sind keine weiteren Abdeckungen für die LED-Lichtquellen erforderlich, um störendes Streulicht etc. im Bereich der Lichtquellen und der Lichteinkopplung zu vermeiden, wenn die lineare LED-Anordnung oder der LED-Streifen des Front-Moduls in einem LED-Gehäuseabschnitt aufgenommen ist, der sich entlang einer Stirnseite der Lichtleiterplatte oder entlang eines von der Lichtleiterplatte ausgebildeten Umlenkabschnitts erstreckt, der LED-Gehäuseabschnitt also gleichzeitig als Einfassung oder Rand des Warenablageabschnitts dienen kann, was einen noch kompakteren Aufbau ergibt.

Gemäß einer weiteren Ausführungsform kann ein noch kompakterer und flexiblerer Aufbau realisiert werden, indem der LED-Gehäuseabschnitt mit einem Träger des Front-Moduls verbunden oder in diesem ausgebildet ist, über den das Front-Modul mit dem Warenablageabschnitt verbindbar ist. Der Träger kann dabei über die gesamte Breite des Warenablageabschnitts mit selbigem verbunden sein, oder beispielsweise nur an den Seiten des Moduls.

Gemäß einer weiteren Ausführungsform lässt sich ein besonders einfacher und kostengünstiger Aufbau realisieren, wenn der vorgenannten Träger als Querstrebe ausgebildet ist, die durch Ablängen eines Endlosprofils ausgebildet ist. Bei geeigneter Ausgestaltung des Trägers als Endlosprofil kann die Lichtleiterplatte des Front-Moduls reib- oder formschlüssig an diesem gehalten sein. Das Endlosprofil kann dabei gleichzeitig für eine weitere Versteifung des Moduls in Querrichtung sorgen.

Gemäß einer weiteren Ausführungsform lässt sich eine besonders effiziente Lichteinkopplung in einfacher Weise realisieren, indem die Lichtleiterplatte des Front-Moduls so an dem vorgenannten Träger abgestützt ist, dass deren Stirnseite der linearen LED-Anordnung oder dem LED-Streifen zugewandt ist und eine Mittellinie eines vorderen Abschnitts der Lichtleiterplatte mit einer optischen Achse der linearen LED-Anordnung oder des LED-Streifens fluchtet.

Gemäß einer weiteren Ausführungsform lässt sich das der Hintergrundbeleuchtung dienende Licht mittels einer Abdeckung in einfacher Weise auf bestimmte Abschnitte konzentrieren, in denen die Text- und/oder Graphikinformation dargeboten werden soll. So kann die Aufmerksamkeit der Kunden in vorteilhaft einfacher Weise auf einzelne Abschnitte des Front-Moduls angezogen werden.

Gemäß einer weiteren Ausführungsform lässt sich dieser Effekt mittels einer leisten- oder rahmenartig ausgebildeten Abdeckung in einfacher Weise realisieren, die eine Beschichtung umfasst, die sich entlang einem oberen und/oder unteren Rand der Vorderseite des Front-Moduls erstreckt oder die Vorderseite rahmenartig umgibt, um einen zentralen Abschnitt mit der zumindest einen Öffnung oder dem zumindest einen Durchlass für die Hintergrundbeleuchtung auszubilden.

Gemäß einer weiteren Ausführungsform kann eine weitere Abdeckung vorgesehen sein, oder die vorgenannte Abdeckung dazu verwendet werden, um ein flächiges Element, insbesondere einen transparenten Kunststoffstreifen, aufzunehmen oder zu halten, auf welchem die darzubietende Text- und/oder Graphikinformation vorgesehen ist, insbesondere aufgedruckt ist.

Gemäß einer weiteren Ausführungsform ist die Vorderseite des Front-Moduls schwenkbeweglich gelagert oder kann das Front-Modul so mit dem Warenablageabschnitt verbunden werden, dass das Front-Modul an diesem schwenkbeweglich gelagert ist, sodass ein Betrachtungswinkel auf die Vorderseite des Front-Moduls veränderbar ist, wobei der Neigungswinkel der Vorderseite des Front-Moduls feststellbar ist, insbesondere mittels Feststellelementen oder Verrastung desselben. Die Ausrichtung kann somit ohne Austausch des Front-Moduls durch Verschwenken oder Verstellen desselben geeignet verändert und anschließend fixiert werden.

Gemäß einer weiteren Ausführungsform weist das Front-Modul ferner eine im Profil rechteckförmige Aufnahme auf, die bevorzugt als Teststreifenaufnahme zur Aufnahme von Teststreifen für Kosmetika ausgebildet ist, wobei die Aufnahme in das Front-Modul eingesteckt ist. Somit kann die Eignung für die Präsentation von Kosmetika und Kosmetikartikeln erheblich gesteigert werden, da Teststreifen, insbesondere für Duftwässer oder Parfüms, in der Aufnahme zuverlässig gehalten werden können und für die Kunden an prominenter Stelle, nämlich im vorderen Bereich des Front-Moduls, bereitgehalten werden können.

Gemäß einem weiteren Gesichtspunkt der vorliegenden Erfindung wird ein Modul für eine Warenpräsentationseinheit zur Darbietung von Waren, insbesondere von Kosmetikartikeln, bereit gestellt, umfassend einen Warenablageabschnitt zur Ablage von Waren, und ein Front-Modul, wie vorstehend beschrieben, das am vorderen Rand des Warenablageabschnitts vorgesehen ist, wobei der Warenablageabschnitt eine horizontale oder im Wesentlichen horizontal angeordnete Ablageplatte zur Abstützung oder Aufnahme von zu präsentierenden Waren aufweist, und wobei die Ablageplatte zumindest abschnittsweise eine flächige Lichtleiterplatte aufweist, der eine Lichtquelle zugeordnet ist, deren Licht in eine Stirnseite der Lichtleiterplatte eingekoppelt ist, wobei die Lichtleiterplatte ausgelegt ist, um für die zu präsentierenden Waren zumindest abschnittsweise eine Hintergrundbeleuchtungsfunktion bereitzustellen.

Die Lichtleiterplatte ist dabei bevorzugt in der Art und Weise, wie vorstehend im Zusammenhang mit dem Front-Modul offenbart, ausgestaltet. Trotz der Reduktion der Lichtquellen auf nur zwei LEDs bzw. LED-Streifen (nämlich einerseits für den Warenablageabschnitt, andererseits für das Front-Modul) kann erfindungsgemäß eine optimale/verbesserte Warenbeleuchtung gewährleistet werden. Mittels der Hintergrundbeleuchtung, die von der Oberfläche der Ablageplatte abgestrahlt bzw. aus dieser ausgekoppelt wird, werden die auf der Ablageplatte befindlichen Waren von unten her gleichmäßig beleuchtet, in der Art einer Flächenbeleuchtung, und werden, sofern Licht auch aus der Unterseite der Ablageplatte ausgekoppelt wird, auch unterhalb der Ablageplatte befindliche Waren, dann von oben her, gleichmäßig beleuchtet, beispielsweise Waren auf einem unterhalb des Moduls angeordneten weiteren Modul einer Präsentationseinheit. Dabei können über die Ansteuerung der Lichtquellen die Beleuchtungsverhältnisse im Ablageabschnitt sowie im Front-Modul gezielt - auch unterschiedlich zueinander - eingestellt werden. Gleichzeitig lässt sich so erfindungsgemäß auch ein geringerer Stromverbrauch realisieren.

Damit die Waren von dem Warenablageabschnitt zuverlässig abgestützt oder aufgenommen werden können, kann dieser insbesondere kastenförmig ausgebildet sein, mit sich entlang der Ränder erstreckenden erhöhten Seitenabschnitten, die ein Abrutschen der zu präsentierenden Ware verhindern. Oder auf der Ablageplatte sind hülsenförmige Aufnahmen, bevorzugt aus einem transparenten oder opaken Material, vorgesehen oder ausgebildet, in welchen die zu präsentierenden Waren zuverlässig aufgenommen sind.

Bevorzugt ist das Front-Modul mit dem Warenablageabschnitt lösbar verbunden, insbesondere durch Verrastung oder Verschraubung. Dabei kann das Front-Modul weiterhin relativ zu dem Warenablageabschnitt verschwenkbar angeordnet sein, um die Orientierung der Vorderseite des Front-Moduls relativ zu dem Warenablageabschnitt zu variieren oder einzustellen, was eine noch wirkungsvollere Präsentation von Waren und zugehöriger Text- und/oder Graphikinformation ermöglicht.

Gemäß einem weiteren Gesichtspunkt der vorliegenden Erfindung wird eine Warenpräsentationseinheit zur Darbietung von Waren, insbesondere von Kosmetikartikeln, bereitgestellt. Diese umfasst zumindest ein Modul, wie vorstehend ausgeführt, welches ein Front-Modul und einen Warenablageabschnitt aufweist, an dessen vorderen Rand das Front-Modul vorgesehen ist, insbesondere mit diesem verbunden ist.

Gemäß einer weiteren Ausführungsform ist die Ablageplatte auf einem rechteckförmigen Rahmen abgestützt oder befestigt, der mit Befestigungsabschnitten verbunden ist, über die das Modul an einer Haltevorrichtung befestigbar ist. Die Befestigungsabschnitte können dabei als L-förmige Träger ausgebildet sein, wobei an dem der Ablageplatte abgewandten Schenkel des L-förmigen Trägers eine Mehrzahl von Rasthaken ausgebildet sind, die zueinander gleichmäßig beabstandet sind und ausgelegt sind, um in Halteöffnungen der Haltevorrichtung eingehängt zu werden. Somit kann das Modul in vorteilhaft einfacher Weise in bestehende Haltestreben einer Warenpräsentationseinheit eingehängt oder daran befestigt werden.

Die hierin offenbarten Shelfs/Module zur Präsentation von Waren, insbesondere Kosmetika, sind gekennzeichnet durch eine optimale Ausnutzung von Lichtquellen, vorzugsweise LED-Streifen, wobei die Shelfs/Module bevorzugt mittels Rasthaken aus Metall an die Rückwand eines Displays befestigt werden können. Die Module können, je nach Kundenwunsch, unterschiedliche Größen, Formen und Farben haben.

Der Grundaufbau jedes Moduls kann erfindungsgemäß ein Kunststoffspritzgussteil oder ein Extrusionsteil aus Kunststoff sein, welches am hinteren Ende Rasthaken aus Metall zum Einstecken in ein Verkaufsdisplay aufweist. Auf dieses Grundgerüst wird eine flächen- bzw. hintergrundbeleuchtete Kunststoffplatte (durch LED zum Leuchten gebrachte transparente Kunststoffplatte) aufgesetzt, welche zur Beleuchtung der Waren dient. Das vordere Ende des Shelfs/Moduls, auch Shelfnose genannt, beststeht bevorzugt aus einem Kunststoffspritzgussteil mit gebogener flächen- bzw. hintergrundbeleuchteter Kunststoffplatte, sowie darauf aufsetzend einer Textstreifenaufnahme. Die Shelfnose kann in unterschiedlichen Ausführungsvarianten zum Einsatz kommen, insbesondere sich in Ausführungsformen unter einem 0° Winkel, einem 45° Winkel oder einem 90° Winkel erstreckend. Weitere Winkelvarianten sind selbstverständlich möglich.

Der vorgenannte Lösungsansatz ermöglicht eine Reduktion der zur Hintergrundbeleuchtung erforderlichen Leuchtkörper und daraus resultierend eine Verminderung des Stromverbauchs, bei gleichzeitiger Verbesserung der Waren-Ausleuchtung.

Zum einen ist durch die zentrale flächenbeleuchtete Kunststoffplatte eine optimale Ausleuchtung der Waren von oben und unten gewährleistet. Zum anderen besteht durch die verschiedenen Shelfnose/Modul-Ausführungen von 0°, 45° und 90° je nach Kundenbedürfnis, eine optimale Textstreifenprofilausleuchtung.

### Figurenübersicht

Die folgenden Figuren beschreiben mögliche Ausführungsformen der Erfindung. Es ist nicht beabsichtigt, dass die Ausführungsformen beschränkend betrachtet werden sollen.
- Fig. 1a: zeigt in einem schematischen Querschnitt ein Modul für eine Warenpräsentationseinheit gemäß einer ersten Ausführungsform der vorliegenden Erfindung;
- Fig. 1b: zeigt in einem Querschnitt ein Front-Modul des Moduls gemäß der Fig. 1a;
- Fig. 1c: zeigt das Modul gemäß der Fig. 1a in einer Perspektivansicht;
- Fig. 2a: zeigt in einem schematischen Querschnitt ein Modul für eine Warenpräsentationseinheit gemäß einer zweiten Ausführungsform der vorliegenden Erfindung;
- Fig. 2b: zeigt in einem Querschnitt ein Front-Modul des Moduls gemäß der Fig. 2a;
- Fig. 2c: zeigt das Modul gemäß der Fig. 2a in einer Perspektivansicht;
- Fig. 3a: zeigt in einem schematischen Querschnitt ein Modul für eine Warenpräsentationseinheit gemäß einer dritten Ausführungsform der vorliegenden Erfindung;
- Fig. 3b: zeigt in einem Querschnitt ein Front-Modul des Moduls gemäß der Fig. 3a;
- Fig. 3c: zeigt das Modul gemäß der Fig. 3a in einer Perspektivansicht;
- Fig. 4: zeigt eine Warenpräsentationseinheit mit mehreren Modulen zur Präsentation von Waren gemäß der vorliegenden Erfindung, wobei die Front-Module unterschiedlich orientiert sind;
- Fig. 5a-5c: zeigen Front-Module gemäß weiteren Ausführungsformen der vorliegenden Erfindung;
- Fig. 6a: zeigt die Verbindung eines Front-Moduls mit einem Warenablageabschnitt gemäß einer weiteren Ausführungsform der vorliegenden Erfindung; und
- Fig. 6b: zeigt die Verbindung eines Front-Moduls mit einem Warenablageabschnitt gemäß einer weiteren Ausführungsform der vorliegenden Erfindung.

In den Figuren bezeichnen identische Bezugszeichen identische oder im Wesentlichen gleichwirkende Elemente oder Elementgruppen.

### Ausführliche Beschreibung von bevorzugten Ausführungsformen

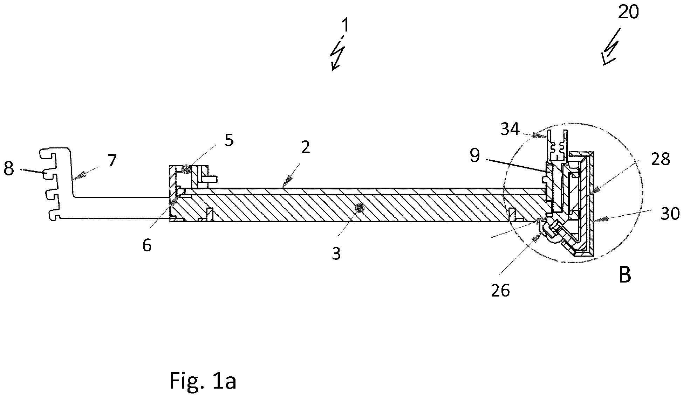

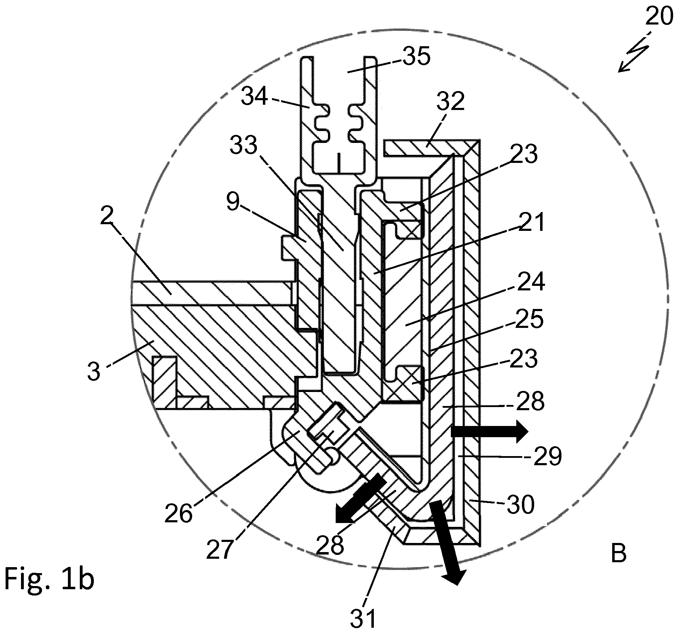

Nachfolgend wird anhand der Figuren 1a-1c eine erste Ausführungsform eines Moduls für eine Warenpräsentationseinheit beschrieben, das allgemein einen Warenablageabschnitt 1 und ein damit verbundenes oder einstückig ausgebildeten Front-Modul 20 umfasst. Das Modul ist insgesamt in der Art eines Regalbretts gestaltet und dient der Abstützung von zu präsentierenden Waren. Die Ablageplatte 2 des Warenablageabschnitts 1 ist hierzu auf einem Rahmen abgestützt, der die beiden Seitenteile 3, eine hintere Querstrebe 5 und als vorderer Rand ein Front-Modul 20 umfasst, das vergrößert in der Fig. 1b dargestellt ist. Die hintere Querstrebe 5 und das Front-Modul 20 stehen von der Ebene, die von der Ablageplatte 2 aufgespannt wird, vor, sodass Waren nicht versehentlich abrutschen können. Die Seitenteile 3 können ebenfalls hochgezogen sein. Der Rahmen des Moduls kann einstückig ausgebildet sein. Zweckmäßig sind jedoch die vorbezeichneten Rahmenteile miteinander verbunden oder zusammengesteckt. Die Ablageplatte 2 dient als Warenablageabschnitt im Sinne der vorliegenden Anmeldung, der allgemein mit dem Bezugszeichen 1 bezeichnet ist, und ist aus einem transparenten, Kunststoff mit Licht-Auskoppelstrukturen ausgebildet, wie vorstehend beschrieben, dient als Lichtleiterplatte und verfügt somit über eine Hintergrundbeleuchtung, sodass Waren oberhalb und/oder unterhalb der Ablageplatte 2 beleuchtet werden können. Im letztgenannten Falle ist die Rückseite der Ablageplatte 2 im Wesentlichen nicht durch Haltestrukturen oder Rahmenbestandteile abgedeckt.

Zweckmäßig ist die Ablageplatte 2 aus einem Kunststoff spritzgegossen oder extrudiert, entweder als gesondertes Bauteil oder einstückig mit Abschnitten des Rahmens oder dem gesamten Rahmenteil des Warenablageabschnitts 1.

Weitere Einzelheiten des Aufbaus des Moduls und der Einkopplung von Licht in die Lichtleiterplatten des Warenablageabschnitts 1 und des Front-Moduls 20 sind in der Schnittansicht gemäß der Fig. 1a, sowie in dem vergrößerten Teilschnitt des Front-Moduls 20 gemäß der Fig. 1b dargestellt.

Gemäß der Fig. 1b ist der Warenablageabschnitt am vorderen Rand durch eine aufrecht stehende Querstrebe 9 abgeschlossen, die entweder Teil des Warenablageabschnitts oder Teil des Front-Moduls 20 ist. Das Front-Modul ist zweckmäßig mit dem Warenablageabschnitt verbunden, kann jedoch Teil des Warenablageabschnitts sein und zu diesem Zweck an einem Fortsatz des Seitenteils 3 gehalten sein. Das Front-Modul 20 weist einen als Querstrebe ausgebildeten Träger 21 auf, der bevorzugt aus einem Endlosprofil, beispielsweise einem Extrusions-Kunststoffprofil oder einem Strangguss-Aluminiumprofil, durch Ablängen ausgebildet ist. Alternativ kann der Träger 21 von einer Mehrzahl von Verrastungs- oder Halteelementen ausgebildet sein, die entlang dem vorderen Rand des Warenablageabschnitts 1 unter regelmäßigen Abständen zueinander angeordnet sind und in welche ein jeweiliger Adapter 24, der korrespondierend zu den Verrastungs- oder Halteelementen ausgebildet ist, wie in der Fig. 1b gezeigt, geeignet verrastet oder eingehängt ist. Am unteren Rand 26 des Trägers 21 ist eine transversale Aussparung ausgebildet, in welcher ein LED-Streifen 27 oder eine Mehrzahl von LEDs in geeigneter Anordnung aufgenommen sind und die somit als LED-Gehäuseabschnitt dient. Die optische Achse des LED-Streifens 27 ist bei dem dargestellten Beispiel gegenüber der horizontalen Ablageplatte 2 um einen Winkel von 45 Grad abwärts geneigt und fluchtet mit der Mittellinie des vorderen Endes der Lichtleiterplatte 28, die - wie auch die Ablageplatte 2 - aus einem transparenten Kunststoff ausgebildet ist. Somit wird das von dem LED-Streifen abgestrahlte Licht in die Stirnseite der Lichtleiterplatte 28 eingekoppelt.

Die Lichtleiterplatte 28 weist einen Licht-Umlenkabschnitt auf, beispielsweise ausgebildet durch Biegen oder durch integrales Spritzgießen oder Extrudieren der Lichtleiterplatte 28, in welchem das in der Lichtleiterplatte 28 geführte Licht in eine andere Richtung umgelenkt wird, nämlich in dem dargestellten Ausführungsbeispiel in eine Richtung senkrecht nach oben. Die Vorder- und/oder Rückseite der Lichtleiterplatte 28 ist in der vorstehend beschriebenen Weise geeignet ausgebildet, sodass das Licht an geeigneten Stellen wieder zur Hintergrundbeleuchtung ausgekoppelt wird. Zweckmäßig erfolgt diese Auskopplung homogen über die gesamte Oberfläche der Lichtleiterplatte 28, insbesondere auch im Bereich des Licht-Umlenkabschnitts, wie in der Fig. 1b durch den Doppelpfeil in diesem Bereich angedeutet. Die Hintergrundbeleuchtung kann jedoch auch durch abschnittsweise anders gestaltete Auslegung der Lichtleiterplatte 28 auch nur abschnittsweise erfolgen, beispielsweise so, dass Licht überwiegend nur zur Vorderseite der Lichtleiterplatte 28 hin ausgekoppelt wird, also in der Fig. 1b nach rechts. Wie durch die das ausgekoppelte Licht symbolisierenden Doppelpfeile in der Fig. 1b angedeutet, ist der Darstellung jedoch eine homogene Auskopplung über die gesamte Oberfläche der Lichtleiterplatte 28 zugrunde gelegt.

An der Vorderseite des Trägers 21 sind zwei Rastvorsprünge 23 ausgebildet, insbesondere in Gestalt von Halte- oder Verrastungsnasen, sodass ein als Querstrebe ausgebildeter Adapter 24 formschlüssig von diesen gehalten ist. Die Lichtleiterplatte 28 ist von dem Adapter 24 gehalten. Dabei kann die Rückseite der Lichtleiterplatte 28 auch zumindest abschnittsweise mit einer Beschichtung 25 bedeckt sein, beispielsweise zur Verbindung mit dem Träger 21 oder dem Adapter 24.

Die Vorderseite der Lichtleiterplatte 28 ist mit einer Abdeckung abgedeckt, die zumindest eine Öffnung oder einen Durchlass für die Hintergrundbeleuchtung aufweist, in welcher die Text- und/oder Graphikinformation mittels der Hintergrundbeleuchtung dargeboten ist. Die Abdeckung 30 ist bevorzugt als Kunststoffstreifen ausgebildet, der auf seiner Oberfläche, auch zumindest abschnittsweise, mit einer Beschichtung, insbesondere als Metallisierung, beschichtet sein kann. Eine solche Beschichtung kann sich beispielsweise entlang einem oberen und/oder unteren Rand der Vorderseite des Front-Moduls 20 erstrecken oder die Vorderseite rahmenartig umgeben, um einen zentralen Abschnitt mit der zumindest einen Öffnung oder dem zumindest einen Durchlass für die Hintergrundbeleuchtung auszubilden. Zur Darbietung der Text- und/oder Graphikinformation kann insbesondere ein transparenter Kunststoffstreifen, auf welchem die zu präsentierende Text- und/oder Graphikinformation vorgesehen, insbesondere aufgedruckt ist, vor der jeweiligen Öffnung oder dem jeweiligen Durchlass angeordnet sein, sodass die zu präsentierende Information von dem ausgekoppelten Licht hinterleuchtet wird.

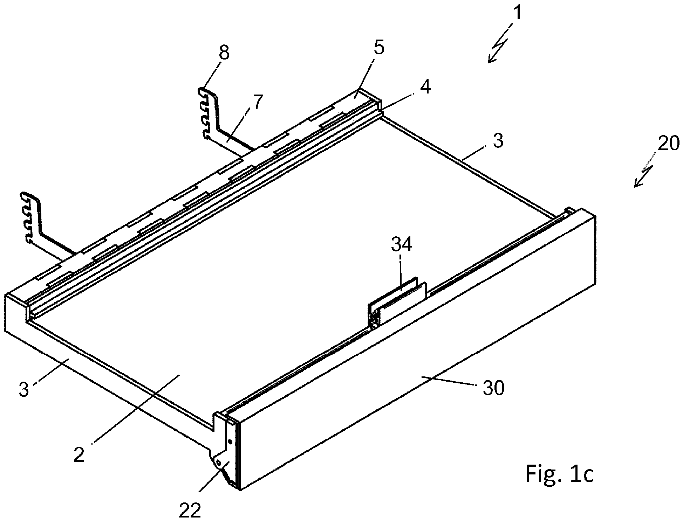

Die Abdeckung 30 selbst kann auch als flexibles Kunststoffprofil ausgebildet sein, dessen vorderes Ende über das vordere Ende des abgewinkelten Abschnitts der Lichtleiterplatte 30 - im Bereich des LED-Gehäuseabschnitts 26 - und dessen hinteres Ende über den oberen Rand der Lichtleiterplatte 28 eingehängt ist. Die Abdeckung 30 kann insbesondere unmittelbar auf die Lichtleiterplatte 30 aufgeclipst werden oder wird von Seitenblenden 22 des Front-Moduls (vgl. Fig. 1c) gehalten.

Bei dem dargestellten Ausführungsbeispiel, gemäß der Fig. 1b, wird das Licht gleichmäßig in die mit den Doppelpfeilen angegeben Richtungen ausgekoppelt, das somit nicht nur die Vorderseite des Front-Moduls 20 sondern auch Bereiche unterhalb und schräg unterhalb des Front-Moduls 20 beleuchtet.

Gemäß der Fig. 1b ist zwischen der Querstrebe 9 und dem Träger 21 ein Freiraum ausgebildet, in welchen ein Haltesteg 33 eingesteckt oder eingeclipst ist, an dessen oberen Ende zwei Seitenstege 34 einen Aufnahmeraum 35 ausbilden, der zur Aufnahme beispielsweise von Textstreifen, Beschriftungsetiketten oder Waren-Preisschildern oder gemäß einer bevorzugten Ausführungsform als Aufnahme bzw. Halterung von Kosmetikteststreifen dient.

Die Fig. 1c zeigt das komplette Shelf/Modul, wie es später in die Verkaufsdisplays eingebaut wird.

Gemäß der Fig. 1a ist der Rahmen des Moduls mit Befestigungsabschnitten 7 verbunden, die bei dem dargestellten Ausführungsbeispiel als L-Profile ausgebildet sind und einer Befestigung des Moduls an einer Haltevorrichtung dienen. Bevorzugt sind hierzu an dem kürzeren Schenkel der L-Profile 7 eine Mehrzahl von zueinander gleichmäßig beabstandeten Rasthaken 8 vorgesehen, die in Halteöffnungen einer Halteschiene eingehängt werden können. Auf diese Weise kann eine einfache Höhenverstellung des Moduls realisiert werden.

Ferner ist am hinteren Ende der Ablageplatte 2 ebenfalls ein kastenförmiger LED-Aufnahmeabschnitt 5 vorgesehen, in welchem ein sich transversal erstreckender LED-Streifen oder eine Mehrzahl von LEDs in geeigneter Anordnung aufgenommen sind. Die Stromversorgung der LED-Beleuchtungseinheiten 6, 27 kann direkt über Befestigungsabschnitte 7 aus Metall, oder über an diesen entlang verlegte Kabel erfolgen.

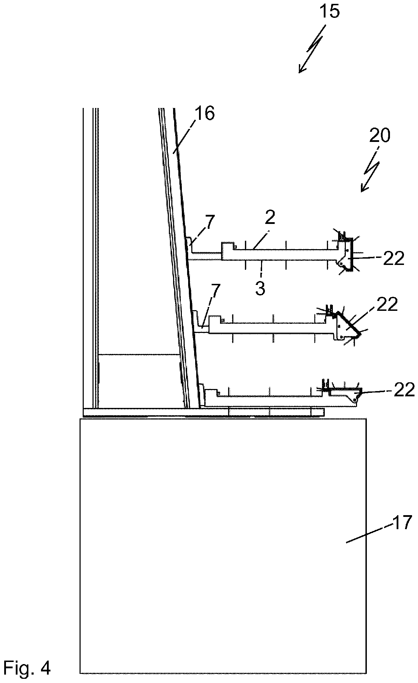

Die Fig. 4 zeigt eine Warenpräsentationseinheit 15 zur Präsentation von Kosmetikartikeln mit drei Modulen 1 der vorstehend beschriebenen Art, die jeweils aus einem Warenablageabschnitt 1 und einem mit diesem verbundenen Front-Modul 20 zusammengesetzt sind. Diese Module 1 sind über die L-Profile 7 und daran vorgesehene Rasthaken in Haltestreben 16 eingehängt. Die Warenpräsentationseinheit 15 weist ferner einen kastenförmigen Basiskörper 17 auf, der zur Aufbewahrung von weiteren Waren aber auch zur Unterbringung von Elektronik dienen kann, insbesondere von Trafos, Batterien oder Schalteinheiten für die LED-Beleuchtungsgruppen.

Wie dem Fachmann beim Studium der Fig. 4 ohne Weiteres ersichtlich sein wird, können die Module 1 auch in anderer Weise mit einer Haltestruktur verbunden oder in diese eingehängt werden. Beispielsweise kann die Haltestruktur als Karkassenwand ausgebildet sein, in welche die Module 1 direkt eingeschraubt oder eingesteckt sind.

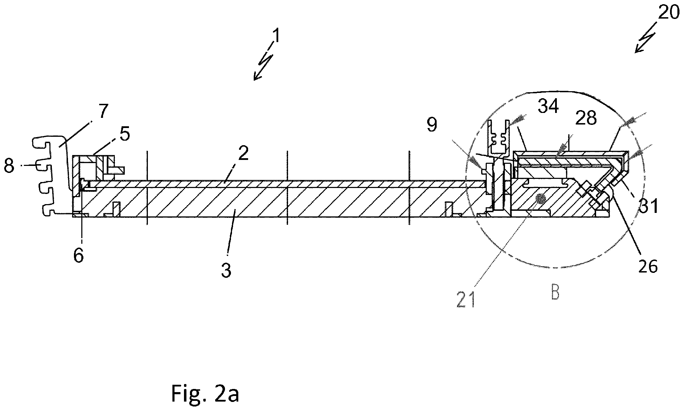

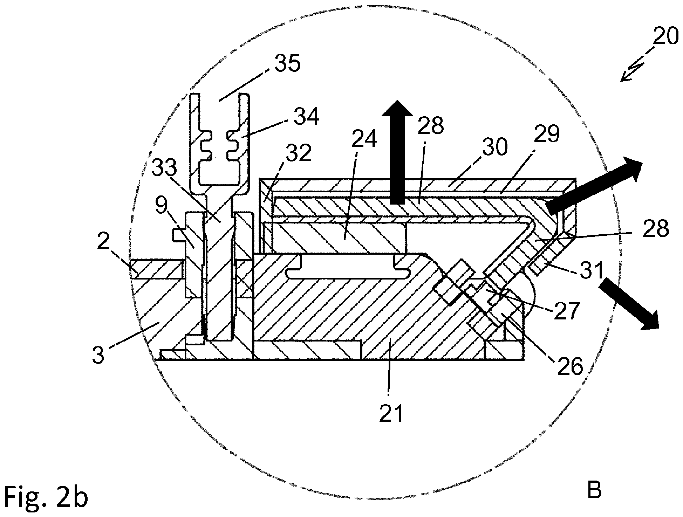

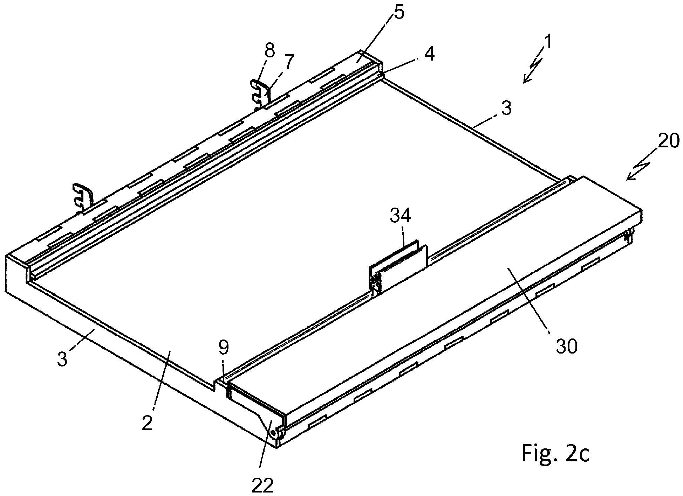

Die Figuren 2a-2c, 3a-3c und 4a-4c zeigen weitere Varianten des vorstehend beschriebenen Moduls. Gemäß den Figuren 2a-2c ist die Vorderseite des Front-Moduls 20 im Wesentlichen parallel zu der horizontalen Ablageplatte 2 ausgerichtet, was im Vergleich einfach nur ein anders ausgestaltetes Trägerprofil 21 erfordert. Die Doppelpfeile in der Fig. 2b stellen dabei die Ausbreitungsrichtung des aus der Lichtleiterplatte 28 ausgekoppelten Lichts dar. Bei diesem Ausführungsbeispiel wird das Licht somit überwiegend vertikal nach oben abgestrahlt, jedoch auch horizontal nach vorne und schräg abwärts.

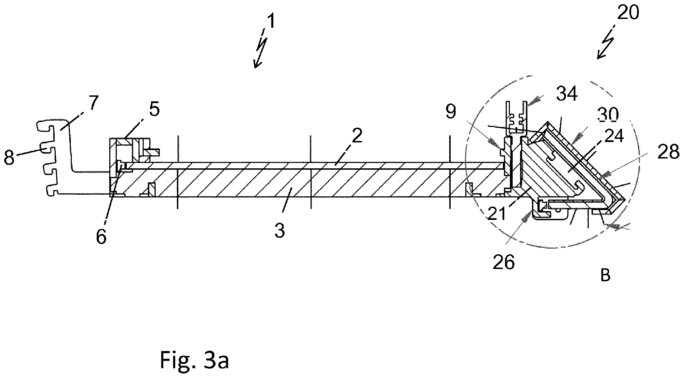

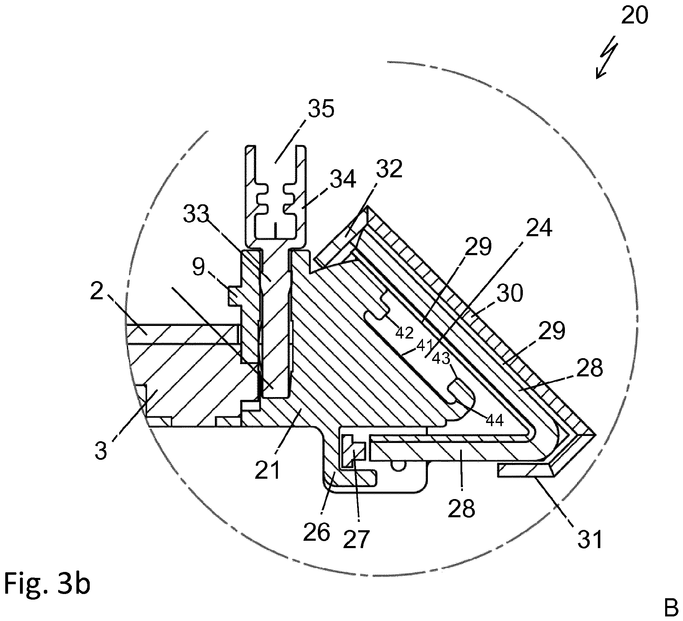

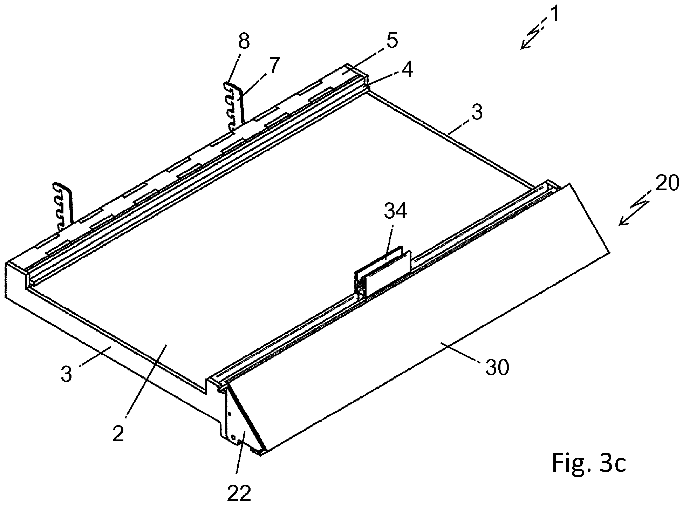

Gemäß den Figuren 3a-3c ist die Vorderseite des Front-Moduls 20 im Wesentlichen unter einem Winkel von 45 Grad zu der horizontalen Ablageplatte 2 ausgerichtet, was im Vergleich einfach nur ein anders ausgestaltetes Trägerprofil 21 erfordert. Die Doppelpfeile in der Fig. 3b stellen dabei die Ausbreitungsrichtung des aus der Lichtleiterplatte 28 ausgekoppelten Lichts dar. Bei diesem Ausführungsbeispiel wird das Licht somit überwiegend unter einem Winkel von 45 Grad schräg aufwärts abgestrahlt, jedoch auch vertikal nach unten.

Gemäß den Figuren 2a-2c ist die Vorderseite des Front-Moduls 20 im Wesentlichen parallel zu der horizontalen Ablageplatte 2 ausgerichtet, was im Vergleich einfach nur ein anders ausgestaltetes Trägerprofil 21 erfordert. Die Doppelpfeile in der Fig. 2b stellen dabei die Ausbreitungsrichtung des aus der Lichtleiterplatte 28 ausgekoppelten Lichts dar. Bei diesem Ausführungsbeispiel wird das Licht somit überwiegend vertikal nach oben abgestrahlt, jedoch auch horizontal nach vorne und schräg abwärts.

Wie dem Fachmann ohne weiteres ersichtlich sein wird, können auf diese Weise auch beliebige andere Winkel realisiert werden, unter denen die Vorderseite des Front-Moduls 20 relativ zu der horizontalen Ablageplatte 2 ausgerichtet ist.

Wie aus der Fig. 4 ersichtlich, können mit Hilfe des erfindungsgemäßen Moduls in einer Präsentationseinheit die Beleuchtungsverhältnisse, wie durch die von dem Front-Modul 20 abragenden schwarzen Linien angedeutet, sehr variabel und individuell vorgegeben werden. So ist beispielsweise das Front-Modul 30 des untersten Moduls parallel zur horizontalen Ablageplatte 2 angeordnet, sodass Licht von der Vorderseite im Wesentlichen nur nach oben abgestrahlt wird, während das Front-Modul 20 des mittleren Moduls um einen Winkel von 45 Grad relativ zur Ablageplatte 2 geneigt ist, sodass Licht sowohl schräg nach oben als auch senkrecht nach unten von der Vorderseite des Front-Moduls 20 abgestrahlt wird, während das Front-Modul 20 des obersten Moduls senkrecht relativ zur Ablageplatte steht, sodass das Licht von der Vorderseite des Front-Moduls 20 im Wesentlichen nur horizontal nach vorne, d.h. hin zum Kunden, also auch schräg nach unten und einwärts abgestrahlt wird. Durch Variation des Neigungswinkels der Front-Module 20 lassen sich diese Beleuchtungsverhältnisse in einfacher Weise variieren.

Um eine noch größere Flexibilität zu erzielen, kann die Vorderseite des Front-Moduls 20 gemäß einer weiteren Ausführungsform (nicht dargestellt) auch schwenkbeweglich gelagert sein, sodass der Betrachtungswinkel auf die Vorderseite des Front-Moduls 20 verändert werden kann. Dabei ist der Neigungswinkel der Vorderseite des Front-Moduls 20 bevorzugt feststellbar, insbesondere mittels Feststellelementen (Schrauben oder dergleichen) oder Verrastung desselben.

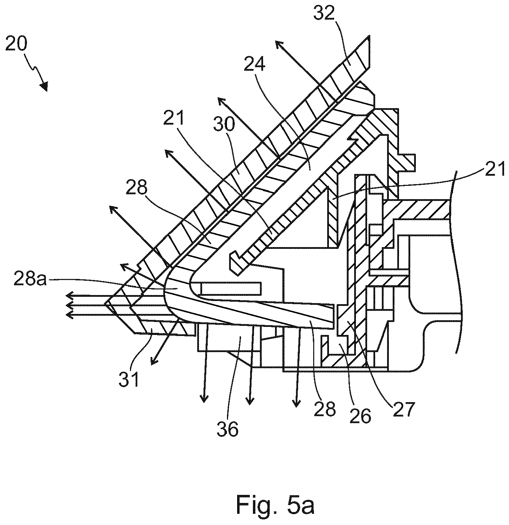

Die Fig. 5a zeigt ein Front-Modul 20 gemäß einer weiteren Ausführungsform gemäß der vorliegenden Erfindung. Licht, das von dem LED-Streifen 27 abgestrahlt und über die Stirnseite in die Lichtleiterplatte 28 eingekoppelt wird, breitet sich in der Lichtleiterplatte 28 weiter aus, wird im Bereich des Licht-Umlenkabschnittts 28a in eine andere Richtung umgelenkt, nämlich um einen Winkel von etwa 135 Grad, und im oberen Abschnitt der Lichtleiterplatte 28 weiter geleitet. Wie durch die Pfeile in der Fig. 5a angedeutet, wird das Licht gleichmäßig von der Vorderseite der Lichtleiterplatte 28 ausgekoppelt und unter einem rechten Winkel zur Oberfläche der Lichtleiterplatte 28 von dieser abgestrahlt. In den nicht-gekrümmten Abschnitten der Lichtleiterplatte 28 wird somit das Licht senkrecht nach unten bzw. unter einem Winkel von etwa 45 Grad nach oben und vorwärts gerichtet abgestrahlt. Ferner wird das Licht auch aus dem Licht-Umlenkabschnitt 28a ausgekoppelt, und zwar insbesondere nach vorne in Richtung eines Betrachters. Die Auskopplung kann im Bereich des Licht-Umlenkabschnitts 28a insbesondere auch stets senkrecht zur lokalen Oberfläche erfolgen. Sollte die Auskopplung im Bereich des Licht-Umlenkabschnitts 28a als störend empfunden werden, so kann in diesem Bereich eine Abdeckung zum Sperren oder zumindest Abschwächen des in diesem Bereich ausgekoppelten Lichts vorgesehen sein.

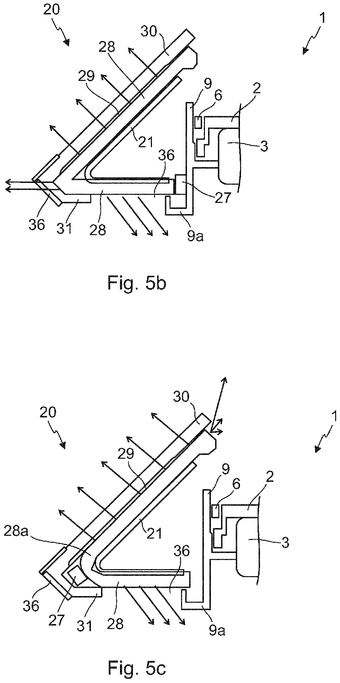

Die Fig. 5b zeigt ein Front-Modul 20 gemäß einer weiteren Ausführungsform gemäß der vorliegenden Erfindung. Durch geeignete Ausgestaltung der Lichtleiterplatte 28 wird das Licht auf der Unterseite des Front-Moduls 20 unter einem spitzen Winkel von etwa 45 Grad rückwärts gerichtet abgestrahlt. Dieser Effekt kann zur Ausleuchtung von darunter angeordneten Waren oder Abschnitten einer Warenpräsentationseinheit ausgenutzt werden. Im Bereich des Licht-Umlenkabschnitts am vorderen Rand des Front-Moduls 20 ist dabei eine Abdeckung 36 vorgesehen, die das in diesem Bereich ausgekoppelte Licht blockiert oder zumindest geeignet abschwächt.

Die Fig. 5c zeigt ein Front-Modul 20 gemäß einer weiteren Ausführungsform gemäß der vorliegenden Erfindung. Abweichend zu den Figuren 5a und 5b wird hier das Licht des LED-Streifens 27 über den Licht-Umlenkabschnitt 28a gleichmäßig in den unteren und oberen Abschnitt der Lichtleiterplatte 28 eingekoppelt, von wo das Licht in der vorstehend beschriebenen Weise wieder abgestrahlt wird, wie durch die Pfeile angedeutet. Die Einkopplung erfolgt dabei zweckmäßig so, dass in etwas gleiche Anteile des Lichts in den schräg aufwärts geneigten Abschnitt der Lichtleiterplatte 28 und in den horizontalen Abschnitt der Lichtleiterplatte 28 eingekoppelt werden, von wo Licht dann wieder ausgekoppelt wird. Gemäß einer weiteren Ausführungsform (nicht dargestellt) kann dabei die Orientierung und/oder Lage des LED-Streifens 27 relativ zu dem Licht-Umlenkabschnitt 28a auch verstellt werden, um die vorgenannten Anteile des Lichts, die in den schräg aufwärts geneigten Abschnitt der Lichtleiterplatte 28 und in den horizontalen Abschnitt der Lichtleiterplatte 28 eingekoppelt werden, geeignet zu variieren. Zu diesem Zweck kann der LED-Streifen 27 relativ zu dem Licht-Umlenkabschnitt 28a schwenkbeweglich gelagert sein.

Gemäß einer weiteren Ausführungsform (nicht gezeigt) mit Einkopplung des Lichts in die Lichtleiterplatte über deren Stirnseite kann ein LED-Streifen in gleicher Weise auch relativ zu der Stirnseite schwenkbeweglich gelagert sein, um die Effizienz der Einkopplung des Lichts in die Lichtleiterplatte zu optimieren oder geeignet einstellen zu können.

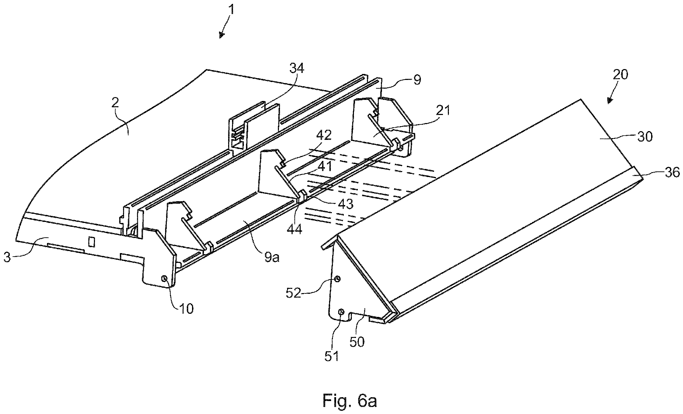

Die Fig. 6a zeigt die Verbindung eines Front-Moduls 20 mit einem Warenablageabschnitt 1 gemäß einer weiteren Ausführungsform der vorliegenden Erfindung. Gemäß der Fig. 6a ist der vordere Rand 9a des Warenablageabschnitts 1 horizontal verlängert und bildet gemeinsam mit der Vorderseite der Querstrebe 9 eine rechteckförmige Aufnahme, die seitlich von den vorderen Enden der Rahmen-Seitenteile 3 des Warenablageabschnitts 1 begrenzt sind. In dieser Aufnahme sind entlang dem vorderen Rand 9a des Warenablageabschnitts 1 unter regelmäßigen Abständen zueinander beabstandet eine Mehrzahl von Halte- oder Verrastungselementen 40 angeordnet, die jeweils als flache Metall- oder Kunststoffelemente ausgebildet sind. Diese weisen jeweils eine Schräge 41 auf, die von einer oberen Haltenase 42 und einer unteren Haltenase 43 begrenzt wird. Zwischen der Schräge 41 und der oberen Haltenase 42 bzw. unteren Haltenase 43 ist eine Aussparung 44 ausgebildet, in welche ein korrespondierend ausgebildetes Verbindungs- oder Verrastungselement (nicht gezeigt) auf der Rückseite des Front-Moduls 20 formschlüssig eingreifen kann, insbesondere eingehängt werden kann. Auf diese Weise kann das Front-Modul 20 mit dem vorderen Rand des Warenablageabschnitts 1 verbunden werden.

Das Front-Modul 20 weist zwei seitliche Abdeckungen 50 auf, in denen eine als Drehachse 51 wirkende Öffnung 51 ausgebildet ist. Auch am vorderen Ende der Rahmen-Seitenteile 3 des Warenablageabschnitts 1 sind entsprechende Öffnungen 10 ausgebildet. In diese Öffnungen 10, 51 können Zapfen, Bolzen, Schrauben oder vergleichbarer Verbindungselemente eingreifen, sodass das Front-Modul 20 relativ zu dem Warenablageabschnitt 1 um die von diesen Zapfen, Bolzen oder Schrauben etc. gebildete Drehachse verschwenkt werden kann. Die gewünschte Orientierung des Front-Moduls 20 kann schließlich mit Hilfe eines Feststellelements 52 arretiert werden, beispielsweise mittels einer Feststellschraube. Um eine ausreichende Schwenkbeweglichkeit des Front-Moduls 20 zu gewährleisten, kann die Größe der Aussparung 44 geeignet das auf Verbindungs- oder Verrastungselement (nicht gezeigt) auf der Rückseite des Front-Moduls 20 abgestimmt sein.

Gemäß einer weiteren Ausführungsform ist die vorgenannte schwenkbewegliche Lagerung des Front-Moduls nicht vorgesehen. Vielmehr wird das Front-Modul unmittelbar in das Verbindungs- oder Verrastungselement (nicht gezeigt) auf der Rückseite des Front-Moduls 20 eingehängt und die Verbindung mittels des Feststellelements 52 gesichert.

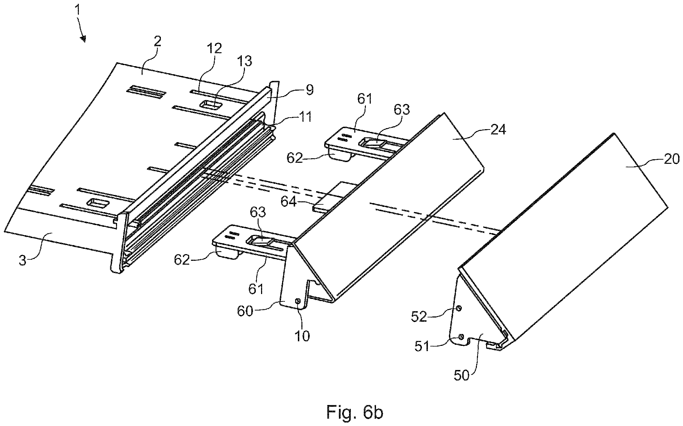

Fig. 6b zeigt die Verbindung eines Front-Moduls mit einem Warenablageabschnitt gemäß einer weiteren Ausführungsform der vorliegenden Erfindung. Gemäß der Fig. 6b ist in der Querstrebe 9 am vorderen Rand des Warenablageabschnitts 1 eine Öffnung 11 ausgebildet, in die Fortsätze 61 eingeführt werden können, die auf der Rückseite des Adapters 24 des Front-Moduls 20 ausgebildet sind. Genauer gesagt weisen die Fortsätze 61 auf Ihrer Unterseite Gleitkufen 62 auf, die auf der Innenseite des Bodens des Warenablageabschnitts 1 gleiten können, um den Adapter 24 bei der Verbindung mit dem Warenablageabschnitt 1 zu führen. Zum Führen des Adapters 24 sind ferner in der Kunststoffplatte 2 Führungsschlitze 12 ausgebildet, die mit den Fortsätzen formschlüssig zusammenwirken. Ferner sind auf den Fortsätzen 61 elastische Rastlaschen 63 ausgebildet, die in korrespondierende Öffnungen 13 oder Ausnehmungen in der Kunststoffplatte 2 einrasten können. Über den Adapter 24 kann so das Front-Modul 20 lösbar mit dem Warenablageabschnitt 1 verbunden werden. Die Ausrichtung des Adapters 24 relativ zu dem Warenablageabschnitt 1 kann weiterhin mit Hilfe einer Führungslasche 64 fixiert werden.

Um die Orientierung der Vorderseite des Front-Moduls 20 durch Verschwenken des Front-Moduls 20 verstellen zu können, sind auf den Seitenteilen 60 bzw. 50 des Adapters 24 bzw. des Front-Moduls 20 in der vorstehend beschriebenen Weise Öffnungen 10 bzw. 51 ausgebildet, in die Zapfen, Bolzen, Schrauben oder vergleichbarer Verbindungselemente eingreifen können. Die gewünschte Orientierung des Front-Moduls 20 kann schließlich mit Hilfe eines Feststellelements 52 arretiert werden, beispielsweise mittels einer Feststellschraube.

Wie dem Fachmann beim Studium der vorstehenden Beschreibung ohne Weiteres ersichtlich sein wird, braucht die Ablageplatte des Warenablageabschnitts nicht zwingend exakt horizontal angeordnet zu werden. Diese kann vielmehr auch geneigt angeordnet werden, beispielsweise schräg abwärts geneigt zum vorderen Ende der Warenpräsentationseinheit. Wie dem Fachmann beim Studium der vorstehenden Beschreibung ohne Weiteres ersichtlich sein wird, können die vorstehend beschriebenen Merkmale auch in anderer Weise miteinander kombiniert werden, als spezifisch vorstehend offenbart. Somit soll dem Schutzbereich der beigefügten Patentansprüche eine breite Auslegung zugrunde gelegt werden. Wie dem Fachmann beim Studium der vorstehenden Beschreibung ohne Weiteres ersichtlich sein wird, können weitere Modifikationen vorgenommen werden, die von den Patentansprüchen mit umfasst werden, sofern diese auch weiterhin unter den allgemeinen Lösungsgedanken und den Schutzbereich der beigefügten Patentansprüche fallen.

### Bezugszeichenliste

- 1: Ablageplatte oder Warenablageabschnitt
- 2: Kunststoffplatte
- 3: Rahmen-Seitenteil
- 4: Anschlag
- 5: Hinteres LED-Gehäuse
- 6: LED / LED-Streifen
- 7: Befestigungsabschnitt
- 8: Einhängehaken
- 9: Querstrebe
- 9a: Unterer Rand von Warenablageabschnitt 1
- 10: Drehachse des Front-Moduls
- 11: Öffnung
- 12: Führungsschlitz
- 13: Aussparung

- 15: Warenpräsentationseinheit
- 16: Befestigungsstrebe
- 17: Grundkörper

- 20: Front-Modul
- 21: Träger
- 22: Seitenteil
- 23: Vorsprung
- 24: Adapter
- 25: Zwischenschicht
- 26: Vorderes LED-Gehäuse
- 27: LED/LED-Streifen
- 28: Kunststoffplatte / Lichtleiterplatte
- 28a: Licht-Umlenkabschnitt
- 29: Zwischenraum
- 30: Abdeckelement
- 31: Vorderes Ende des Abdeckelements
- 32: Hinteres Ende des Abdeckelements
- 33: Haltesteg
- 34: Seitensteg / Reiter
- 35: Beschriftungsaufnahme
- 36: Abdeckung

- 40: Verrastungs- oder Halteelement
- 41: Schräge
- 42: obere Haltenase
- 43: untere Haltenase
- 44: Aussparung

- 50: Seitenabdeckung des Front-Moduls
- 51: Drehachse des Front-Moduls
- 52: Feststellelement für Front-Modul

- 60: Seitenteil des Adapters 24
- 61: Fortsatz
- 62: Gleitkufe
- 63: Rastlasche
- 64: Führungslasche

## Patentansprüche

1. Front-Modul (20) für einen Warenablageabschnitt (1) einer Warenpräsentationseinheit (15), wobei das Front-Modul (20) ausgelegt ist, um am vorderen Rand des Warenablageabschnitts (1) vorgesehen zu sein, wobei das Front-Modul eine flächige Lichtleiterplatte (28) und eine dieser zugeordnete Lichtquelle (27) aufweist, wobei Licht der Lichtquelle (27) in die Lichtleiterplatte (28) eingekoppelt wird und die Lichtleiterplatte ausgelegt ist, um auf der Vorderseite des Front-Moduls (20) zumindest abschnittsweise eine Hintergrundbeleuchtung für eine darzubietende Text- und/oder Graphikinformation bereitzustellen, wobei
die flächige Lichtleiterplatte (28) einen ersten nicht-gekrümmten Abschnitt, einen sich diesem anschließenden gekrümmten Licht-Umlenkabschnitt (28a) und einen sich dem gekrümmten Licht-Umlenkabschnitt (28a) anschließenden zweiten nicht-gekrümmten Abschnitt umfasst, und
der gekrümmte Licht-Umlenkabschnitt (28a) zum Umlenken des in die Lichtleiterplatte (28) eingekoppelten Lichts in eine andere Ausbreitungsrichtung ausgelegt ist,
**dadurch gekennzeichnet, dass** die Lichtleiterplatte (28) so ausgelegt ist, dass Licht in dem ersten nicht-gekrümmten Abschnitt und in dem zweiten nicht-gekrümmten Abschnitt jeweils in unterschiedliche Raumrichtungen ausgekoppelt wird.

2. Front-Modul (20) nach Anspruch 1, wobei das Front-Modul (20) so mit dem Warenablageabschnitt (1) verbindbar ist, dass das Front-Modul (20) von einer von dem Warenablageabschnitt (1) aufgespannten Ebene, die zur Ablage von Waren in dem Warenablageabschnitt dient, vorsteht, um ein Abrutschen von Waren von dem Warenablageabschnitt zu verhindern, wobei das Front-Modul (20) ferner ausgelegt ist, um den Warenablageabschnitt (1) zumindest abschnittsweise abzuschließen.

3. Front-Modul (20) nach einem der vorhergehenden Ansprüche, wobei das Licht der Lichtquelle (27) in eine Stirnseite der Lichtleiterplatte (28) oder in den gekrümmten Licht-Umlenkabschnitt (28a) der Lichtleiterplatte (28) eingekoppelt ist.

4. Front-Modul (20) nach Anspruch 3, wobei die Orientierung und/oder Lage der Lichtquelle (27) relativ zu der Stirnseite oder dem gekrümmten Licht-Umlenkabschnitt (28a) der Lichtleiterplatte (28) veränderbar ist, um die Einkopplung des Lichts der Lichtquelle (27) in die Lichtleiterplatte (28) einzustellen oder anzupassen.

5. Front-Modul (20) nach einem der vorhergehenden Ansprüche, wobei das Front-Modul (20) ausgelegt ist, um mit dem Warenablageabschnitt (1) verrastet werden zu können, insbesondere an einem vorderen Rand desselben.

6. Front-Modul (20) nach einem der vorhergehenden Ansprüche, wobei die Lichtquelle (27) als lineare LED-Anordnung oder LED-Streifen ausgebildet ist, wobei die lineare LED-Anordnung oder der LED-Streifen des Front-Moduls (20) in einem LED-Gehäuseabschnitt (26) aufgenommen ist, der sich entlang einer Stirnseite der Lichtleiterplatte (28) oder entlang der gekrümmten Licht-Umlenkabschnitts (28a) der Lichtleiterplatte (28) erstreckt, wobei der LED-Gehäuseabschnitt (26) mit einem Träger (21) des Front-Moduls verbunden oder in diesem ausgebildet ist, über den das Front-Modul mit dem Warenablageabschnitt verbindbar ist.

7. Front-Modul (20) nach Anspruch 6, wobei ein vorderes Ende der Lichtleiterplatte (28) des Front-Moduls, das der linearen LED-Anordnung oder dem LED-Streifen zugewandt ist, relativ zu der Vorderseite des Front-Moduls abgewinkelt ist, insbesondere unter einem Winkel von 45 Grad, wobei
die Oberfläche der Lichtleiterplatte (28) des Front-Moduls so ausgelegt ist, dass zur Bereitstellung der Hintergrundbeleuchtung Licht gleichmäßig aus einer der Vorderseite zugewandten Oberfläche der Lichtleiterplatte ausgekoppelt wird, oder
die Oberfläche der Lichtleiterplatte (28) des Front-Moduls zumindest abschnittsweise so ausgelegt ist, dass zur Bereitstellung der Hintergrundbeleuchtung Licht aus der Lichtleiterplatte (28) zumindest abschnittsweise unter einem spitzen Winkel zur Oberfläche der Lichtleiterplatte (28) ausgekoppelt wird.

8. Front-Modul (20) nach einem der vorhergehenden Ansprüche, wobei die Vorderseite des Front-Moduls (20) zumindest teilweise mit einer Abdeckung abgedeckt ist, die zumindest eine Öffnung oder einen Durchlass für die Hintergrundbeleuchtung aufweist, in welcher die Text- und/oder Graphikinformation mittels der Hintergrundbeleuchtung dargeboten ist, wobei die Abdeckung zumindest abschnittsweise mit einer Beschichtung versehen ist, insbesondere einer Metallisierung, wobei die Beschichtung sich entlang einem oberen und/oder unteren Rand der Vorderseite des Frontmoduls erstreckt oder die Vorderseite rahmenartig umgibt, um einen zentralen Abschnitt mit der zumindest einen Öffnung oder dem zumindest einen Durchlass für die Hintergrundbeleuchtung auszubilden, wobei
das Front-Modul bevorzugt weiterhin eine im Profil rechteckförmige Aufnahme (35) aufweist, die bevorzugt als Teststreifenaufnahme zur Aufnahme von Teststreifen für Kosmetika ausgebildet ist, wobei die Aufnahme (35) in das Front-Modul eingesteckt ist.

9. Front-Modul (20) nach einem der vorhergehenden Ansprüche, wobei die Vorderseite des Front-Moduls mit einer zumindest abschnittsweise für die Hintergrundbeleuchtung transparenten Abdeckung (30-32) bedeckt ist, wobei die Abdeckung ein flächiges Element, insbesondere einen transparenten Kunststoffstreifen, aufweist, auf welchem die darzubietende Text- und/oder Graphikinformation vorgesehen ist, insbesondere aufgedruckt ist.

10. Front-Modul (20) nach einem der vorhergehenden Ansprüche, wobei die Vorderseite des Front-Moduls schwenkbeweglich gelagert ist oder wobei das Front-Modul (20) so mit dem Warenablageabschnitt (1) verbindbar ist, dass das Front-Modul (20) an diesem schwenkbeweglich gelagert ist, sodass ein Betrachtungswinkel auf die Vorderseite des Front-Moduls veränderbar ist, wobei der Neigungswinkel der Vorderseite des Front-Moduls feststellbar ist, insbesondere mittels Feststellelementen oder Verrastung desselben.

11. Modul für eine Warenpräsentationseinheit (15) zur Darbietung von Waren, insbesondere von Kosmetikartikeln, umfassend
einen Warenablageabschnitt (1) zur Ablage von Waren, und
ein Front-Modul (20), das am vorderen Rand des Warenablageabschnitts (1) vorgesehen ist,
wobei der Warenablageabschnitt (1) eine horizontale Ablageplatte (2) zur Abstützung oder Aufnahme von zu präsentierenden Waren aufweist, und wobei die Ablageplatte (2) zumindest abschnittsweise eine flächige Lichtleiterplatte aufweist, der eine Lichtquelle (6) zugeordnet ist, deren Licht in eine Stirnseite der Lichtleiterplatte eingekoppelt ist, wobei die Lichtleiterplatte ausgelegt ist, um für die zu präsentierenden Waren zumindest abschnittsweise eine Hintergrundbeleuchtungsfunktion bereitzustellen,
**dadurch gekennzeichnet, dass** das Front-Modul (20) nach einem der vorhergehenden Ansprüche ausgebildet ist.

12. Modul für eine Warenpräsentationseinheit (15) nach Anspruch 11, wobei das Front-Modul (20) mit dem Warenablageabschnitt (1) lösbar verbunden, insbesondere verrastet ist, und/oder wobei das Front-Modul (20) relativ zu dem Warenablageabschnitt (1) verschwenkbar ist, um die Orientierung der Vorderseite des Front-Moduls (20) relativ zu dem Warenablageabschnitt (1) zu variieren oder einzustellen.

13. Warenpräsentationseinheit zur Darbietung von Waren, insbesondere von Kosmetikartikeln, **gekennzeichnet durch** zumindest ein Modul nach Anspruch 11 oder 12.

14. Warenpräsentationseinheit nach Anspruch 13, wobei die Vorderseite des Front-Moduls in Bezug zu einer von der horizontalen Ablageplatte (2) des Warenablageabschnitts (1) aufgespannten Ebene unter einem Winkel von 30 Grad, 45 Grad, 60 Grad, 75 Grad oder 90 Grad geneigt ist oder sich parallel zu dieser erstreckt.

15. Warenpräsentationseinheit nach Anspruch 14, wobei die Ablageplatte (2) auf einem rechteckförmigen Rahmen (3) abgestützt oder befestigt ist, der mit Befestigungsabschnitten (7) verbunden ist, über die das Modul an einer Haltevorrichtung (16) befestigbar ist, wobei die Befestigungsabschnitte als L-förmige Träger (7) ausgebildet sind, wobei an dem der Ablageplatte (2) abgewandten Schenkel des L-förmigen Trägers eine Mehrzahl von Rasthaken (8) ausgebildet sind, die zueinander gleichmäßig beabstandet sind und ausgelegt sind, um in Halteöffnungen der Haltevorrichtung eingehängt zu werden,
weiterhin umfassend einen Basiskörper (17), insbesondere einen kastenförmigen Basiskörper, und eine Haltevorrichtung (16) aufweist, an welcher die Module befestigt sind, wobei die Haltevorrichtung eine Mehrzahl von vertikalen oder gegenüber einer Senkrechten sich geneigt erstreckende Haltestreben aufweist, in welcher gleichmäßig beabstandet eine Mehrzahl von Halteöffnungen ausgebildet sind, in welche die Module eingehängt sind.

## Claims

1. A front module (20) for a portion (1) for supporting products of a product display unit (15), wherein the front module (20) is configured to be disposed at the front end of the portion (1) for supporting products, wherein the front module comprises a planar light guide plate (28) and a light source (27) associated to it, wherein light from the light source (27) is coupled into the light guide plate (28) and the light guide plate is configured to provide a back-lighting for a text and/or graphics information to be displayed at least in sections at the front side of the front module (20), wherein
the light guide plate (28) has a first non-curved portion, an adjacent curved light deflecting portion (28a) and a second non-curved portion adjacent to the curved light deflecting portion (28a), and
the curved light deflecting portion (28a) is configured for deflecting the light coupled into the light guide plate (28) into another direction of propagation,
**characterized in that** the light guide plate (28) is configured such that light is respectively coupled out in different spatial directions in the first non-curved portion and in the second non-curved portion.

2. The front module (20) as claimed in claim 1, wherein the front module (20) can be coupled with the portion (1) for supporting products in such a manner that the front module (20) protrudes from a plane spanned by the portion (1) for supporting products that serves for supporting products for preventing slippage of products from the portion for supporting products, wherein the front module (20) is configured furthermore to delimit the portion (1) for supporting products at least in sections.

3. The front module (20) as claimed in any of the preceding claims, wherein the light from the light source (27) is coupled into an end face of the light guide plate (28) or into the curved light deflecting portion (28a) of the light guide plate (28).

4. The front module (20) as claimed in claim 3, wherein the orientation and/or position of the light source (27) relative to the end face or the curved light deflecting portion (28a) of the light guide plate (28) can be changed for adjusting or matching the coupling of light of the light source (27) into the light guide plate (28).

5. The front module (20) as claimed in any of the preceding claims, the front module (20) is configured furthermore to be latched or locked with the portion (1) for supporting products, in particular at a front edge thereof.

6. The front module (20) as claimed in any of the preceding claims, wherein the light source (27) is formed as a linear LED array or a strip of LEDs, wherein the linear LED array or strip of LEDs of the front module (20) is accommodated in an LED housing portion (26) extending along an end face of the light guide plate (28) or along the curved light-deflecting portion (28a) of the light guide plate (28), wherein the LED housing portion (26) is connected to a carrier (21) of the front module or formed therein and wherein the front module can be connected to the portion for supporting products via the carrier.

7. The front module (20) as claimed in claim 6, wherein a front end of the light guide plate (28) of the front module, which faces toward the linear LED array or strip of LEDs, is bent relative to the front side of the front module, in particular by an angle of 45 degrees, wherein
the surface of the light guide plate (28) of the front module is configured in such a manner that light is uniformly coupled out from a surface of the light guide plate facing toward the front side for providing the back-lighting function, or
the surface of the light guide plate (28) of the front module is configured at least in sections in such a manner that light is coupled out of the light guide plate (28) at least in sections under an acute angle relative to the surface of the light guide plate (28) for providing the back-lighting function.

8. The front module (20) as claimed in any of the preceding claims, wherein the front side of the front module (20) is covered at least in sections by a cover, which comprises at least one opening or at least one passage for the back-lighting, in which the text and/or graphics information is displayed by means of the back-lighting, wherein the cover is provided at least in sections with a coating, in particular with a metallization, wherein the coating extends along an upper and/or lower edge of the front side of the front module or wherein surrounds the front side like a frame, for forming a central portion having the at least one opening or the at least one passage for the back-lighting, wherein
the front module preferably further comprises a receptacle (35) that is rectangular in profile, which is preferably configured as a receptacle for receiving a test strip for cosmetics, wherein the receptacle (35) is inserted into the front module

9. The front module (20) as claimed in any of the preceding claims, wherein the front side of the front module is covered at least in sections by a cover (30-32), which is transparent for the back-lighting at least in sections, wherein the cover comprises a planar member, in particular a transparent plastic strip, on which the text and/or graphics information to be displayed is provided, in particular by printing.

10. The front module (20) as claimed in any of the preceding claims, wherein the front side of the front module is pivotally supported or wherein the front module (20) can be connected with the portion (1) for supporting products in such a manner that the front module (20) is pivotally mounted thereon, so that a viewing angle onto the front side of the front module can be varied, wherein the angle of inclination of the front side of the front module can be locked, in particular by means of locking elements or latching.

11. A module for a product display unit (15) for displaying products, in particular cosmetic products, comprising
a portion (1) for supporting products, and
a front module (20) provided at the front end of the portion (1) for supporting products,
wherein the portion (1) for supporting products comprises a horizontal shelf plate (2) for supporting or receiving products to be displayed, and wherein the shelf plate (2) comprises at least in sections a planar light guide plate having a light source (6) associated thereto, wherein light of the light source is coupled into a front face of the light guide plate, wherein the light guide plate is configured to provide a back-lighting function for the products to be displayed at least in sections,
**characterized in that** the front module (20) is formed as claimed in any of the preceding claims.

12. The module for a product display unit (15) as claimed in claim 11, wherein the front module (20) is releasably coupled to the portion (1) for supporting products, in particular by latching, and/or wherein the front module (20) can be pivoted relative to the portion (1) for supporting products for varying or adjusting the orientation of the front side of the front module (20) relative to the portion (1) for supporting products.

13. A product display unit for displaying products, in particular cosmetic products, **characterized by** at least one module as claimed by claim 11 or 12.

14. The product display unit as claimed in claim 13, wherein the front side of the front module is inclined with respect to a plane spanned by the horizontal shelf plate (2) of the portion (1) for supporting products under an angle of 30 degrees, 45 degrees, 60 degrees, 75 degrees or 90 degrees or extends in parallel therewith.

15. The product display unit as claimed in claim 14, wherein the shelf plate (2) is supported or mounted on a rectangular frame (3), which is connected to fixing portions (7), wherein the module can be fastened to a holding device (16) via the fixing portions, wherein the fixing portions are formed as L-shaped carriers (7), wherein a plurality of latching hooks (8) are formed on a leg of the L-shaped carrier facing away from the shelf (2), the latching hooks being spaced apart at equidistant spacing and being configured to be hooked into holding openings of the holding device,
further comprising a base body (17), in particular a box-shaped base body, and a holding device (16), on which the modules are mounted, wherein the holding device comprises a plurality of vertical support struts or a plurality of support struts, which are inclined relative to a vertical direction, and wherein a plurality of holding openings are formed in the vertical or inclined support struts at equidistant spacing, into which the modules are mounted.

## Revendications

1. Un module avant (20) pour un élément de support de marchandises (1) d'une unité de présentation de marchandises (15), dans lequel le module avant (20) est configuré pour être disposé à une extrémité avant de l'élément (1) de support de marchandises, dans lequel le module avant comporte une plaque plane de guidage de lumière (28) et une source lumineuse (27) y associée, dans lequel la lumière générée par la source lumineuse (27) est couplée au sein de la plaque plane de guidage de lumière (28) et la plaque plane de guidage de lumière est configurée pour fournir un rétro-éclairage pour une information textuelle et/ou graphique qui est affichée au moins partiellement sur la face avant du module avant (20),
dans lequel la plaque de guidage de lumière (28) présente une première partie non incurvée, une partie déflectrice de lumière courbe adjacence (28a), et une seconde partie non incurvée qui est adjacente à la partie déflectrice de lumière courbe (28a) ; et
la partie déflectrice de lumière courbe (28a) est configurée pour dévier la lumière couplée au sein de la plaque de guidage de lumière (28) vers une autre direction de propagation,
**caractérisé en ce que** la plaque guide de lumière (28) est configurée de telle manière à ce que la lumière est respectivement couplée dans différentes directions spatiales dans la première partie non incurvée et la seconde partie non incurvée.

2. Le module avant (20) selon la revendication 1, dans lequel le module avant (20) peut être couplée à l'élément (1) de support de marchandises de telle manière que le module avant (20) fait saillie par rapport à un plan couvert par l'élément (1) de support de marchandises pour empêcher un glissement des marchandises de l'élément de support de marchandises, dans lequel le module avant (20) est configuré en outre pour délimiter au moins partiellement l'élément (1) de support de marchandises.

3. Le module avant (20) selon l'une quelconque des revendications précédentes, dans lequel la lumière générée par la source lumineuse (27) est couplée à une face d'extrémité de la plaque de guidage de lumière (28) ou à l'intérieur de la partie déflectrice de lumière courbe (28a) de la plaque de guidage de lumière (28).

4. Le module avant (20) selon la revendication 3, dans lequel l'orientation et/ou la position de la source lumineuse (27) par rapport à la face d'extrémité ou à la partie déflectrice de lumière courbe (28a) de la plaque de guidage de lumière (28) peut être changée pour ajuster ou correspondre au couplage de lumière de la source lumière (27) à l'intérieur de la plaque de guidage de lumière (28).

5. Le module avant (20) selon l'une quelconque des revendications précédentes, dans lequel le module avant (20) est configuré pour être verrouillé ou bloqué avec l'élément (1) de support de marchandises, en particulier au niveau de son bord avant.

6. Le module avant (20) selon l'une quelconque des revendications précédentes, dans lequel la source de lumière (27) est conçue comme une bande linéaire de LED ou rangées de LED, dans lequel la bande linéaire de LED ou rangées de LED du module avant (20) est/sont logé(es) au sein d'une partie de logement de LED (26) qui se prolonge le long d'une face d'extrémité de la plaque de guidage de lumière (28) ou le long de la partie déflectrice de lumière courbe (28a) de la plaque de guidage de lumière (28), dans lequel la partie de logement de LED (26) est relié à un support (21) du module avant ou formé en son sein, et dans lequel le module avant peut être relié à l'élément de support de marchandises via le support.

7. Le module avant (20) selon la revendication 6, dans lequel une extrémité avant de la plaque de guidage de lumière (28) du module avant, qui fait face à la bande linéaire de LED ou les rangées de LED, est coudée par rapport à la face avant du module avant, en particulier avec un angle de 45 degrés,
dans lequel la surface de la plaque de guidage de lumière (28) du module avant est configurée de telle manière à ce que la lumière est couplée de manière uniforme pour fournir une lumière d'éclairage d'arrière-plan depuis une surface de la plaque de guidage de lumière vers le côté avant, ou
la surface de la plaque de guidage de lumière (28) du module avant est configurée au moins partiellement de telle manière à ce que la lumière est couplée de manière uniforme pour fournir une lumière d'éclairage d'arrière plan suivant un angle aigue par rapport à la surface de la plaque de guidage de lumière (28)

8. Le module avant (20) selon l'une quelconque des revendications précédentes, dans lequel le côté avant du module avant (20) est au moins partiellement recouvert d'un couvercle ayant au moins une ouverture ou un passage pour le rétro-éclairage, dans lequel le texte et/ou l'information graphique est présentée au moyen de rétro-éclairage, dans lequel le couvercle est au moins partiellement pourvue d'un revêtement, en particulier une métallisation, dans lequel le revêtement se prolonge le long d'un bord supérieur et/ou inférieur de la face avant du module avant ou dans lequel il entoure la face avant à la manière d'un cadre, pour former une partie centrale ayant l'ouverture ou les passages pour le rétro-éclairage,
dans lequel le module avant comporte en outre de préférence un logement (35), de profile rectangulaire, qui est de préférence configuré sous la forme d'un logement pouvant recevoir une bande de test pour cosmétiques, dans lequel le logement (35) est inséré dans le module avant.

9. Le module avant (20) selon l'une quelconque des revendications précédentes, dans lequel la face avant du module avant est recouvert au moins partiellement d'un couvercle (30-32), qui est au moins partiellement transparent pour le rétro-éclairage, dans lequel le couverte comporte un élément plan, en particulier une bande de plastique transparent, sur laquelle le texte et/ou l'information graphique à affichée peut être imprimée.

10. Le module avant (20) selon l'une quelconque des revendications précédentes, dans lequel la face avant du module avant est monté pivotante, ou dans lequel le module avant (20) peut être relié à l'élément (1) de support de marchandises de telle manière que le module avant (20) peut y être monté de manière pivotante, de sorte qu'un angle de vision sur le côté frontal du module avant est variable, dans lequel l'angle d'inclinaison de la face avant du module avant peut être verrouillé, en particulier au moyen d'éléments de verrouillage ou d'encliquetage.

11. Un module pour une unité de présentation de marchandises (15) pour la présentation de marchandises, en particulier des produits cosmétiques, comprenant un élément (1) de support de marchandises, et
un module avant (20) qui est prévu au niveau du bord avant de l'élément de support de marchandises (1),
dans lequel l'élément (1) de support de marchandises comprend un plateau d'étagère horizontal (2) pour supporter ou recevoir des marchandises en présentation, et dans lequel le plateau d'étagère (2) comporte au moins partielle une plaque de guidage de lumière plane ayant une source lumineuse (6) qui y est associée, dans lequel la lumière de la source lumière est couplée à une face avant de la plaque de guidage de lumière, dans lequel la plaque de guidage de lumière est configurée pour fournir une fonction au moins partielle de retro-éclairage pour les marchandises en présentation,
**caractérisé en ce que** le module avant (20) est conçu selon l'une quelconque des revendications précédentes.

12. Le module pour une unité de présentation de marchandises (15) selon la revendication 11, dans lequel le module avant (20) est couplé de manière amovible à l'élément (1) de support de marchandises, en particulier par le verrouillage, et/ou dans lequel le module avant (20) peut être pivoté par rapport à l'élément (1) de support de marchandises pour varier ou régler l'orientation de la face avant du module avant (20) relativement à l'élément (1) de support de marchandises.

13. Une unité de présentation de marchandises, en particulier des produits cosmétiques, **caractérisé par** au moins un module tel que revendiqué dans les revendications 11 ou 12.

14. L'unité de présentation de marchandises selon la revendication 13, dans lequel la face avant du module avant est inclinée par rapport à un plan couvert par le plateau d'étagère horizontal (2) de l'élément (1) de support de marchandises, sous un angle de 30 degrés, 45 degrés, 60 degrés, 75 degrés, 90 degrés ou s'étend parallèlement à celui-ci.

15. L'unité de présentation de produit selon la revendication 14, dans lequel le plateau d'étagère (2) est supporté ou monté sur un cadre rectangulaire (3), qui est relié à des éléments de fixation (7), dans lequel le module peut être fixé à un dispositif de maintien (16) via les éléments de fixation (7), dans lequel les éléments de fixations présentent la forme de supports en L profilés (7), dans lequel une pluralité de crochets de verrouillage (8) sont formés sur une patte du support en forme de L faisant face au plateau d'étagère (2), les crochets de verrouillage étant disposés à intervalle équidistant et configuré pour être accrochés dans des ouvertures de retenu du dispositif de maintien,
comprenant en outre un corps de base (17), en particulier un corps de base en forme de boîte, et un dispositif de maintien (16), sur lesquels les modules sont montés, dans lequel le dispositif de maintien comporte une pluralité de jambe de support verticales ou une pluralité de jambe de support, qui sont inclinées par rapport à la direction verticale, et dans lequel une pluralité d'ouverture de maintien sont disposées dans les jambes de support verticales ou inclinent à des espacements équidistants, à l'intérieur desquelles les modules sont montés.
